# EUROPÄISCHE PATENTSCHRIFT

(11) **EP 3 456 666 B1**
(45) Veröffentlichungstag und Bekanntmachung des Hinweises auf die Patenterteilung: **02.11.2022**
(21) Anmeldenummer: 18192617.1
(22) Anmeldetag: 05.09.2018
(51) Int. Cl.: B65G 69/24, B65G 7/02, B65G 67/02, B62D 57/032

(54) **LASTENBOCK, WECHSELAUFBAU SOWIE VERFAHREN ZUM AUFLADEN UND ABSTELLEN EINES LASTENBOCKS**
LOAD TRESTLE, SWAP BODY AND METHOD FOR LOADING AND RAISING A LOAD TRESTLE
ANNEAU DE CHARGE, CAISSE MOBILE AINSI QUE PROCÉDÉ DE CHARGE ET DE POSE D'UN ANNEAU DE CHARGE

(30) Priorität: 14.09.2017 DE 102017121267
(43) Veröffentlichungstag der Anmeldung: 20.03.2019
(73) Patentinhaber: Rachinger, Reinhold, 91710 Gunzenhausen (DE)
(72) Erfinder: Rachinger, Reinhold, 91710 Gunzenhausen (DE)
(74) Vertreter: Canzler & Bergmeier Patentanwälte Partnerschaft mbB

(56) Entgegenhaltungen:
- EP-A2- 1 344 733
- DE-B- 1 230 362
- DE-C1- 19 501 543
- GB-A- 2 260 523

## Beschreibung

Die vorliegende Erfindung betrifft einen Lastenbock zum Lagern und Transportieren von Gütern, einen Wechselaufbau mit mindestens zwei Lastenböcken, ein Verfahren zum Aufladen von auf mindestens einem Lastenbock gelagerten Gütern auf eine Aufladefläche eines Fahrzeugs und ein Verfahren zum Abstellen eines auf einer Aufladefläche eines Fahrzeugs befindlichen Lastenbocks mit darauf gelagerten Gütern auf eine Fläche.

Lastenböcke zum Lagern und Transportieren von Gütern sowie Wechselaufbauten sind wohlbekannt. Dabei wird zum Aufladen eines Lastenbocks oder eines Wechselaufbaus eine Aufladefläche eines Fahrzeugs, beispielsweise eines LKW-Aufliegers, genau unter den Lastenbock beziehungsweise den Wechselaufbau rangiert. Sodann wird die Aufladefläche angehoben oder der Lastenbock beziehungsweise der Wechselaufbau abgesenkt, so dass die Aufladefläche in Kontakt mit dem Lastenbock bzw. dem Wechselaufbau gebracht wird. Anschließend wird der Kontakt zwischen dem Lastenbock bzw. dem Wechselaufbau und der Fläche, auf der diese standen, gelöst. Das Fahrzeug mitsamt Lastenbock bzw. Wechselaufbau kann nun losfahren. Nachteilig an dieser Methode und damit an den bekannten Lastenböcken beziehungsweise Wechselaufbauten ist, dass die Aufladefläche des Fahrzeugs sehr genau in Bezug auf den Lastenbock bzw. den Wechselaufbau positioniert werden muss. Dies erfordert beim Rangieren einen geübten Fahrzeugführer sowie relativ viel Zeit und Fingerspitzengefühl.

Ferner sind Lastenhebevorrichtungen in Form von so genannten Schreitgeräten zum horizontalen Bewegen von Lasten bekannt. Beschrieben ist eine derartige Vorrichtung beispielsweise in der DE 1 230 362 B, die den Oberbegriff des Anspruchs 1 offenbart.

Aufgabe der vorliegenden Erfindung ist es somit, einen Lastenbock beziehungsweise einen Wechselaufbau und ein dazugehöriges Verfahren zu schaffen, die das Aufladen eines Lastenbocks beziehungsweise eines Wechselaufbaus vereinfachen.

Die Aufgabe wird gelöst durch einen Lastenbock, einen Wechselaufbau, ein Verfahren zum Aufladen und ein Verfahren zum Abstellen mit den Merkmalen der unabhängigen Patentansprüche.

Vorgeschlagen wird ein Lastenbock zum Lagern und Transportieren von Gütern, beispielsweise Eisenrohren, Dachpaneelen oder sonstigen länglichen Gegenständen. Dabei werden die Güter, wenn sie gelagert werden, vom Lastenbock abgestützt. Beim Transport werden die Güter dann zusammen mit dem Lastenbock transportiert.

Der Lastenbock weist ein ein- oder mehrteiliges Oberteil zum Abstützen der Güter auf. Die Güter befinden sich also sowohl beim Lagern als auch beim Transport auf diesem Oberteil. Das Oberteil umfasst eine Stützvorrichtung zum Abstellen des Lastenbocks auf einer Fläche, beispielsweise auf einem Lagerplatz. Des Weiteren weist der Lastenbock ein über eine Führung beweglich mit dem Oberteil verbundenes, ein- oder mehrteiliges, Unterteil auf, wobei die Führung einen oder mehrere Führungsabschnitte umfassen kann. Die Bewegung des Unterteils gegenüber dem Oberteil ist durch die Führung vorzugsweise auf eine Längsrichtung des Lastenbocks eingeschränkt. Schließlich umfasst der Lastenbock ein Verschiebemittel, welches ein Verschieben des Oberteils gegenüber dem Unterteil ermöglicht.

Durch ein Verschieben des Oberteils gegenüber dem Unterteil ist es möglich, eine ungenaue Positionierung einer Aufladefläche eines Fahrzeugs in Bezug auf den Lastenbock zu korrigieren. Zum Aufladen von auf einem Lastenbock gelagerten Gütern ist es also nicht mehr notwendig, die Aufladefläche des Fahrzeugs exakt unter den Lastenbock zu rangieren. Vielmehr reicht es aus, die Aufladefläche ungefähr unter dem Lastenbock zu platzieren. Sodann wird das Unterteil des Lastenbocks so verschoben, dass die gewünschte Lage von Unterteil zu Auflagefläche erzielt wird. Nun wird das Unterteil mit der Auflagefläche in Kontakt gebracht, beispielsweise durch Absenken des Lastenbocks oder Anheben der Ladefläche. Das Oberteil wird dann gegenüber dem Unterteil so verschoben, dass eine gewünschte Lage von Oberteil zu Unterteil, und damit auch von Oberteil zur Aufladefläche des Fahrzeugs erzielt wird. Es entfällt also das exakte Rangieren, wodurch der Aufladevorgang vereinfacht und damit auch beschleunigt wird.

Vorteilhafterweise umfasst die Stützvorrichtung eine Aufnahmeeinrichtung für Stützen. Dies können beispielsweise Hülsen sein, in die die Stützen eingesteckt werden. Des Weiteren kann eine Sicherungseinrichtung, beispielsweise ein geeigneter Bolzen, vorgesehen sein, der die Stützen gegen unbeabsichtigtes Herauskommen aus der Aufnahmeeinrichtung sichert. Die Stützen können sodann am Fahrzeug oder am Lastenbock befestigt werden, so dass sie mittransportiert werden und an einem Abstellort der Güter wieder verfügbar sind. Um Transportgewicht zu sparen, können die Stützen allerdings auch am Aufladeort gelassen werden. In diesem Fall sind zum Abstellen des Lastenbocks am Abstellort jedoch entweder andere Stützen oder ein anderes Abstellsystem erforderlich.

Es ist von Vorteil, wenn die Stützvorrichtung Stützen umfasst, die vorzugsweise klappbar und/oder teleskopierbar sind. In diesem Fall können die Stützen zum Transport einfach weggeklappt bzw. zusammengeschoben werden. Vorzugsweise sind die Stützen Bestandteil des Lastenbocks und ohne Lösen von Sicherungen oder Befestigungsmittel nicht vollständig von diesem lösbar.

Es ist ferner vorgesehen, dass das Verschiebemittel eine oder mehrere Gleitflächen und/oder Rollkörper, vorzugsweise in Form von Lagerwellen und/oder Lagerkugeln, im Kontaktbereich zwischen Oberteil und Unterteil umfasst. Dadurch wird die Reibung zwischen Oberteil und Unterteil verringert und das Verschieben des Oberteils gegenüber dem Unterteil erleichtert.

Vorteilhafterweise ist eine Positioniereinrichtung vorgesehen. Diese Positioniereinrichtung erleichtert es, das Oberteil in Bezug auf das Unterteil exakt zu positionieren. Dadurch wird die Genauigkeit der Lage des Oberteils in Bezug auf das Unterteil erhöht, was wiederum die Verkehrssicherheit erhöht, und/oder die Positionierung kann schneller erfolgen.

Es ist von Vorteil, wenn die Positioniereinrichtung mindestens eine Rastlücke, insbesondere eine Vertiefung oder eine Aussparung, umfasst zum Zusammenwirken mit einem oder mehreren der Verschiebemittel. Dabei kommt in der exakten Position von Oberteil zu Unterteil eine Lagerkugel oder eine Lagerwelle in der entsprechenden Aussparung zu liegen. Durch dieses Einrasten wird die exakte Position von Oberteil zu Unterteil angezeigt und die Positionierung erfolgt in dem Bereich, in dem das Verschiebemittel mit der Aussparung in Kontakt steht, sogar von selbst.

Vorteilhaft ist es, wenn die Positioniereinrichtung einen, insbesondere mechanischen, elektrischen und/oder elektronischen, Sensor umfasst. Bei einem mechanischen Sensor kann es sich im einfachsten Fall um einen Zeiger und eine dazugehörige Nullmarke handeln. Ein elektrischer Sensor ist beispielsweise ein Kontakt, der bei einer hinreichend genauen Positionierung geschlossen wird. Dieser Kontakt kann zudem auch mit einer Schaltung verbunden sein, die ein Alarmsignal auslöst, wenn das Fahrzeug bewegt wird ohne dass Oberteil und Unterteil korrekt positioniert sind. Als elektronischer Sensor ist schließlich ein Entfernungssensor denkbar, der über Leuchtmittel oder ein Display anzeigt, ob die Positionierung genau erfolgt ist bzw. in welche Richtung das Oberteil noch in Bezug auf das Unterteil verschoben werden muss.

Von Vorteil ist es auch, wenn das Verschiebemittel eine Verschiebeeinrichtung, insbesondere mit einem oder mehreren elektrischen, pneumatischen und/oder hydraulischen Elementen, umfasst. Es ist zwar prinzipiell auch möglich, das Oberteil mitsamt Gütern gegenüber dem Unterteil durch Muskelkraft zu verschieben. Dies ist aber bei schweren Gütern nur möglich, wenn die Reibung zwischen Oberteil und Unterteil sehr gering ist und wenn der Lastenbock perfekt horizontal steht. In allen anderen Fällen ist eine Unterstützung durch die Verschiebeeinrichtung notwendig. Elektrisch kann dies beispielsweise durch einen oder mehrere Elektromotoren durchgeführt werden, pneumatisch bzw. hydraulisch mit entsprechenden Zylindern.

In einer vorteilhaften Weiterbildung des Lastenbocks sind elektrische, pneumatische und/oder hydraulische Anschlüsse vorgesehen. Mittels dieser Anschlüsse kann die benötigte elektrische Energie, Druckluft bzw. Hydraulikflüssigkeit der Verschiebeeinrichtung bereitgestellt werden. Die elektrische Energie, Druckluft bzw. Hydraulikflüssigkeit kommt dabei entweder vom Fahrzeug oder wird extern zugeführt.

Vorteilhafterweise weist die Verschiebeeinrichtung Steuerelemente und/oder einen Anschluss für ein Steuergerät auf. Die Steuerelemente erlauben es dabei, das Oberteil gegenüber dem Unterteil per Knopfdruck in die eine oder andere Richtung zu bewegen. Im Zusammenspiel mit einem entsprechenden Sensor kann dies sogar nach einem Knopfdruck automatisch erfolgen. Ein an den Anschluss anzuschließendes Steuergerät bietet dabei dieselbe Funktionalität wie die Steuerelemente.

Es ist von Vorteil, wenn eine Relativbewegung von Unterteil zu Oberteil in Vertikalrichtung und/oder Querrichtung des Lastenbocks durch Formschluss begrenzt oder unterbunden ist. So kann einfach sichergestellt werden, dass sich Oberteil und Unterteil nur in Längsrichtung des Lastenbocks zueinander bewegen.

Vorteilhaft ist es, wenn das Unterteil Verbindungselemente zum Verbinden mit einem Fahrzeug aufweist, insbesondere Eckbeschläge zum Zusammenwirken mit Twistlocks. Dies ermöglicht es, das Unterteil fest mit dem Fahrzeug zu verbinden, was für die Verkehrssicherheit von großer Bedeutung ist. Verbindungen von Eckbeschlägen mit Twistlocks haben sich zudem bewährt, sind einfach zu handhaben und bieten eine hohe Haltekraft.

Der Lastenbock ist gemäß der vorangegangenen Beschreibung ausgebildet, wobei die genannten Merkmale einzeln oder in beliebiger Kombination vorhanden sein können.

Ferner wird ein Wechselaufbau mit mindestens zwei Lastenböcken gemäß der vorangegangenen Beschreibung vorgeschlagen. Der Wechselaufbau ist beispielsweise ein Container mit den besagten Lastenböcken. In dem Container können problemlos kleinere oder größere Güter gelagert und anschließend transportiert werden. Zwei Lastenböcke weisen dabei vorzugsweise jeweils vier Stützen auf, so dass der Wechselaufbau sicher abgestellt werden kann. Die Lastenböcke können dabei lösbar, beispielsweise durch Schrauben oder mit einer Twistlock-Verbindung, oder unlösbar, beispielsweise durch Schweißen, mit dem Container verbunden sein oder direkt in den Container integriert sein. Ein solcher Wechselaufbau lässt sich einfach und leicht auf ein Fahrzeug aufladen, wobei ein exaktes Rangieren nicht mehr notwendig ist.

Die weiteren für den Lastenbock genannten Vorteile treffen äquivalent auch für den Wechselaufbau zu.

Des Weiteren wird ein Verfahren zum Aufladen von auf mindestens einem Lastenbock gelagerten Gütern auf eine Aufladefläche eines Fahrzeugs vorgeschlagen. Dabei wird zunächst die Aufladefläche unter den Lastenbock rangiert. Dies kann erfindungsgemäß ungenau sein, da eine genaue Ausrichtung in den weiteren Schritten erzielt wird. Sodann wird ein Unterteil des Lastenbocks so verschoben, dass eine gewünschte Lage von Unterteil zu Aufladefläche erzielt wird. Nun wird das Unterteil in Kontakt mit der Aufladefläche gebracht. Dies kann beispielsweise durch Absenken des Lastenbocks oder durch Anheben der Aufladefläche passieren. Schließlich wird ein Oberteil des Lastenbocks mitsamt den auf dem Lastenbock gelagerten Gütern gegenüber dem Unterteil so verschoben, dass eine gewünschte Lage von Oberteil zu Unterteil erzielt wird. So sind die Aufladefläche, das Unterteil und das Oberteil mit den Gütern genau zueinander ausgerichtet, wobei das aufwendige exakte Rangieren entfallen ist.

Schließlich wird ein Verfahren zum Abstellen eines auf einer Aufladefläche eines Fahrzeugs befindlichen Lastenbocks mit darauf gelagerten Gütern auf eine Fläche vorgeschlagen. Dabei wird die Aufladefläche an einen Abstellort rangiert. Auch hier genügt es, die Aufladefläche ungefähr an den richtigen Abstellort zu rangieren. Sodann wird ein Oberteil des Lastenbocks gegenüber einem Unterteil des Lastenbocks so verschoben, dass das Oberteil eine gewünschte Endposition einnimmt. In diesem Schritt wird also die genaue Abstellposition des Oberteils und der darauf gelagerten Güter bestimmt. Sodann wird das Oberteil mit Stützen abgestützt und das Unterteil außer Kontakt mit der Aufladefläche gebracht. In einem letzten Schritt kann das Unterteil wieder in eine Ausgangslage zum Oberteil gebracht werden. Mit diesem Verfahren ist es also möglich, das Oberteil mit den Gütern exakt auf einer Fläche abzustellen, ohne dass hierfür ein ebenso exaktes Rangieren nötig wäre.

Sowohl das Verfahren zum Aufladen als auch das Verfahren zum Abstellen lassen sich ebenso mit einem Wechselaufbau statt mit einem Lastenbock durchführen. Des Weiteren treffen die für den Lastenbock beschriebenen vorteilhaften Ausführungen auch entsprechend für die beiden Verfahren zu.

Weitere Vorteile der Erfindung sind in den nachfolgenden Ausführungsbeispielen beschrieben. Es zeigt:
- **Figur 1**: eine perspektivische Ansicht eines Lastenbocks,
- **Figur 2a**: eine Seitenansicht eines weiteren Lastenbocks,
- **Figur 2b**: eine weitere Seitenansicht des Lastenbocks aus Figur 2a,
- **Figur 3a**: einen Längsschnitt durch einen weiteren Lastenbock,
- **Figur 3b**: einen weiteren Längsschnitt durch den Lastenbock aus Figur 3a,
- **Figur 4**: einen Längsschnitt durch einen weiteren Lastenbock und
- **Figur 5**: eine Seitenansicht eines Wechselaufbaus.

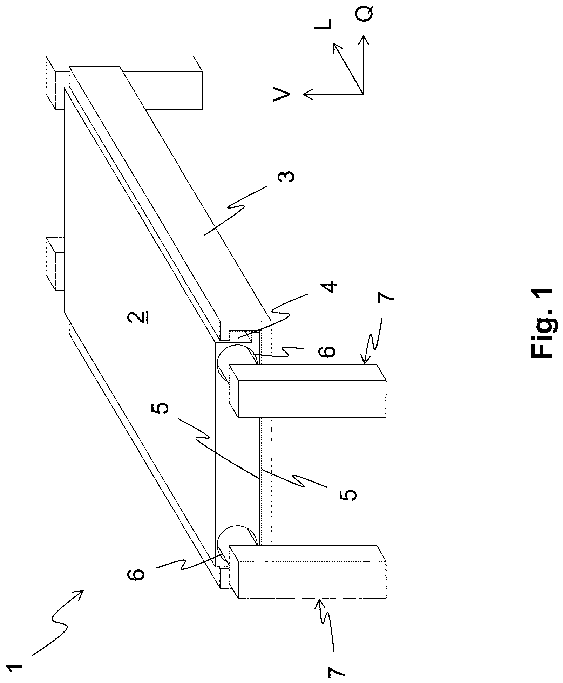

Figur 1 zeigt eine perspektivische Ansicht eines erfindungsgemäßen Lastenbocks 1. Der Lastenbock 1 weist ein Oberteil 2 und ein Unterteil 3 auf. Dabei werden auf dem Oberteil 2 zu transportierende Güter abgestützt und das Unterteil 3 wird in Kontakt mit einer Aufladefläche eines Transportfahrzeugs gebracht.

Eine Führung 4 erlaubt ein Verschieben des Unterteils 3 in Bezug auf das Oberteil 2 in Längsrichtung L des Lastenbocks 1. Um das Verschieben zu erleichtern, sind an der Unterseite des Oberteils und der Oberseite des Unterteils Gleitflächen 5 vorgesehen. Eine Relativbewegung des Unterteils 3 zum Oberteil 2 in Querrichtung Q des Lastenbocks 1 ist durch die Führung 4 unterbunden und eine Relativbewegung in Vertikalrichtung V ist auf eine kleine Distanz beschränkt.

Des Weiteren weist der Lastenbock 1 Aufnahmeeinrichtungen 6 für Stützen 7 auf. In diesem Ausführungsbeispiels sind die Stützen 7 lediglich in die Aufnahmeeinrichtungen 6 hineingesteckt.

Bei der nachfolgenden Beschreibung alternativer Ausführungsbeispiele werden für Merkmale, die im Vergleich zu anderen Ausführungsbeispielen in ihrer Ausgestaltung und/oder Wirkweise identisch und/oder zumindest vergleichbar sind, gleiche Bezugszeichen verwendet. Sofern diese nicht nochmals detailliert erläutert werden, entspricht deren Ausgestaltung und/oder Wirkweise der Ausgestaltung und Wirkweise der vorstehend bereits beschriebenen Merkmale.

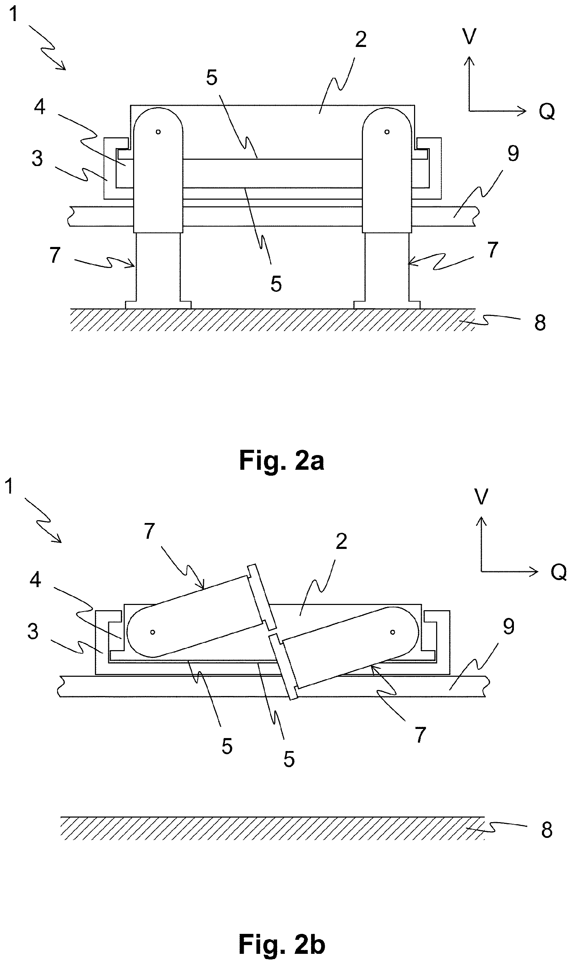

Figur 2a zeigt eine Seitenansicht eines weiteren Lastenbocks 1. Der Lastenbock 1 ist dabei auf einer Fläche 8 abgestützt. Des Weiteren wird ein Teil einer Aufladefläche 9 eines Fahrzeugs gezeigt, die unter den Lastenbock 1 rangiert wurde.

Um den Lastenbock 1 auf die Aufladefläche 9 des Fahrzeugs aufzuladen, wird nun das Unterteil 3 so entlang der Längsrichtung L verschoben, dass das Unterteil 3 in Bezug auf die Aufladefläche 9 richtig positioniert ist. Nun wird die Aufladefläche 9 des Fahrzeugs angehoben oder der Lastenbock 1 abgesenkt, so dass der Lastenbock 1 nun von der Aufladefläche 9 und nicht mehr von den Stützen 7 getragen wird.

Die Stützen 7 dieses Lastenbocks 1 sind um eine Achse A klappbar sowie teleskopierbar ausgebildet. Da der Lastenbock 1 nun nicht mehr von den Stützen 7 getragen wird, können sie eingefahren und hochgeklappt werden. Dies wird in Figur 2b gezeigt. Sodann wird das Oberteil 2 in Bezug auf das Unterteil 3 in Längsrichtung L verschoben bis Oberteil 2 und das Unterteil 3 die richtige Lage zueinander einnehmen.

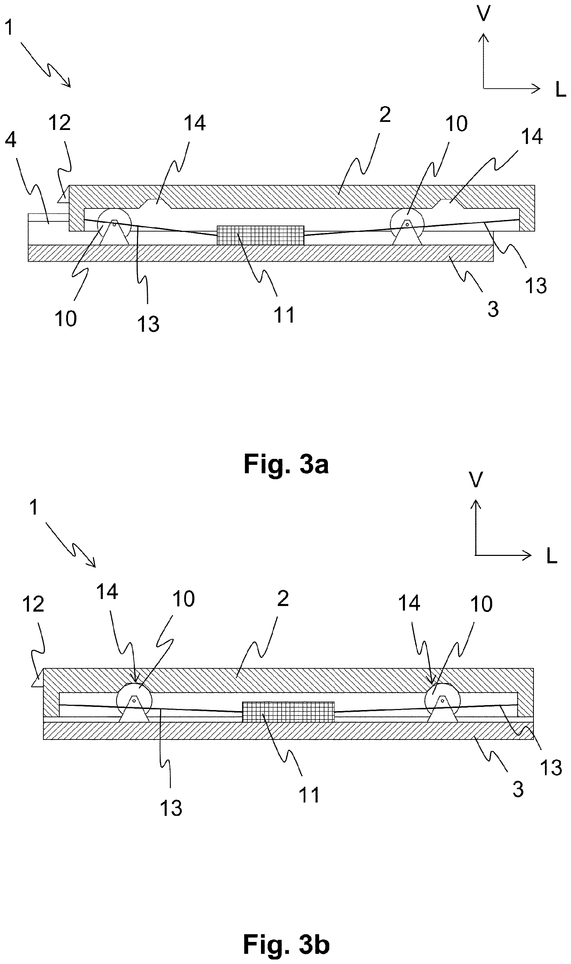

Figur 3a zeigt einen Längsschnitt durch ein weiteres Ausführungsbeispiel eines Lastenbocks 1. Zur besseren Verschiebbarkeit des Oberteils 2 gegenüber dem Unterteil 3 sind hier Lagerwellen 10 vorgesehen. Des Weiteren ist eine als hydraulisches Element 11 ausgebildete Verschiebeeinrichtung vorgesehen, die über ein Steuerelement 12 bedient wird. Die Stangen 13 verbinden dabei das hydraulische Element 11 mit dem Oberteil 2.

Um das Oberteil 2 genau in Bezug auf das Unterteil 3 zu positionieren, wird das Oberteil 2 über die Stangen 13 durch das hydraulische Element 11 verschoben. Um die exakte Positionierung zu erleichtern, sind im Oberteil 2 als Vertiefung ausgebildete Rastlücken 14 vorgesehen. Ist die exakte Position von Oberteil 2 zu Unterteil 3 erreicht, rasten die Lagerwellen 10 in die Rastlücken 14 ein, wie es in Figur 3b gezeigt ist.

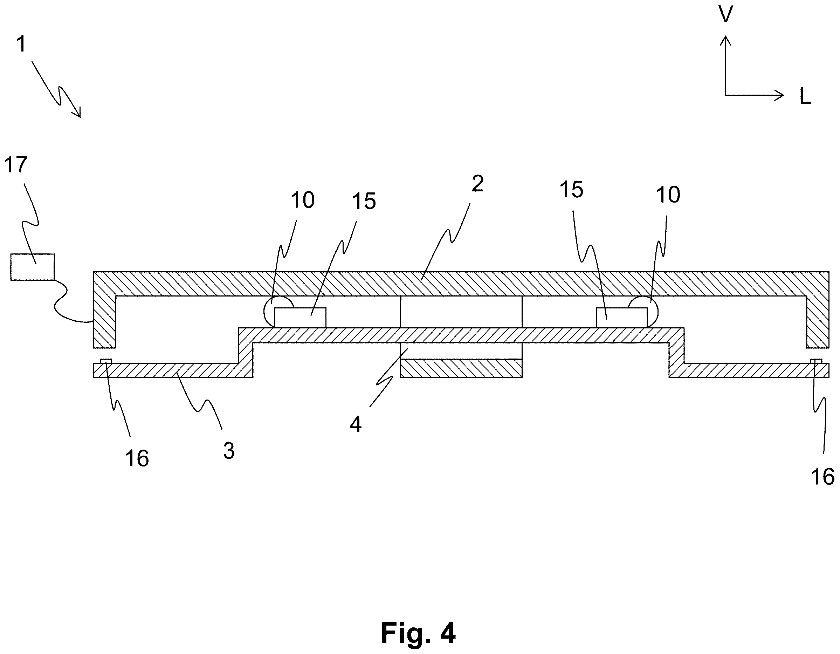

Ferner zeigt Figur 4 einen Längsschnitt durch einen weiteren Lastenbock 1. Die Führung 4 ist in diesem Ausführungsbeispiel anders gestaltet als in den vorhergegangenen, erlaubt aber ebenfalls eine Verschiebung des Oberteils 2 in Bezug auf das Unterteil 3 in Längsrichtung L und beschränkt die Beweglichkeit des Oberteils 2 in Vertikalrichtung V und Querrichtung Q.

Die Lagerwellen 10 werden direkt durch Elektromotoren 15 angetrieben. Sensoren 16 registrieren dabei, wenn das Oberteil 2 exakt in Bezug auf das Unterteil 3 positioniert ist und zeigen dies auf einem Steuergerät 17 an.

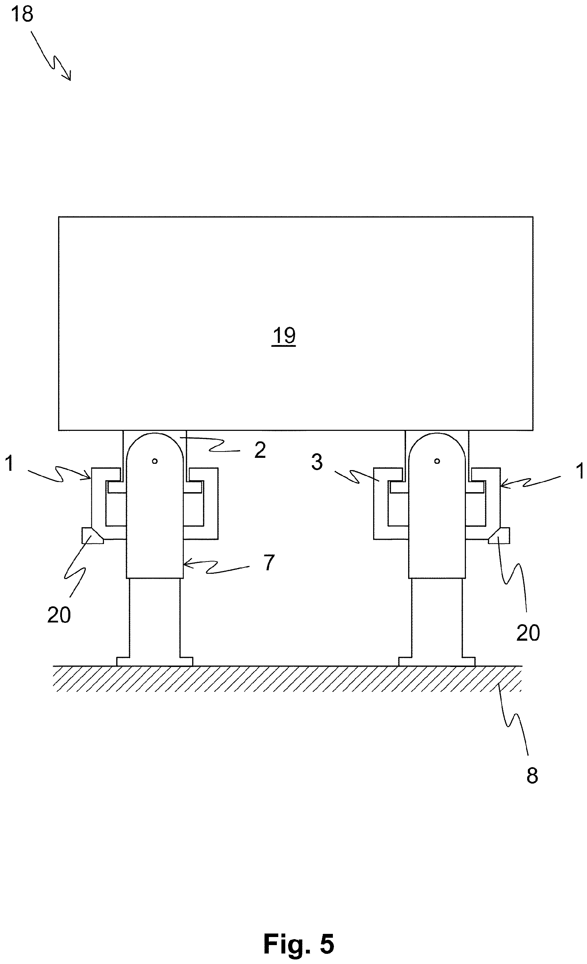

Schließlich zeigt Figur 5 eine Seitenansicht eines Wechselaufbaus 18 mit einem Container 19 und zwei erfindungsgemäßen Lastenböcken 1. Die Lastenböcke 1 weisen dabei Eckbeschläge 20 auf. Mit dem Fahrzeug verbundene Twistlocks können mit diesen Eckbeschlägen 20 zusammenwirken und somit die Lastenböcke 1 und damit den Wechselaufbau 18 fest und verkehrssicher mit dem Fahrzeug verbinden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Lastenbock
- 2: Oberteil
- 3: Unterteil
- 4: Führung
- 5: Gleitfläche
- 6: Aufnahmeeinrichtung
- 7: Stützen
- 8: Fläche
- 9: Aufladefläche
- 10: Lagerwelle
- 11: Hydraulisches Element
- 12: Steuerelement
- 13: Stange
- 14: Rastlücke
- 15: Elektromotor
- 16: Sensor
- 17: Steuergerät
- 18: Wechselaufbau
- 19: Container
- 20: Eckbeschlag

- L: Längsrichtung
- Q: Querrichtung
- V: Vertikalrichtung

## Patentansprüche

1. Lastenbock zum Lagern und Transportieren von Gütern, aufweisend ein Oberteil (2) zum Abstützen der Güter mit einer Stützvorrichtung zum Abstellen des Lastenbocks (1) auf einer Fläche (8), ein über eine Führung (4) beweglich mit dem Oberteil (2) verbundenes Unterteil (3), wobei die Bewegung des Unterteils (3) gegenüber dem Oberteil (2) durch die Führung (4) vorzugsweise auf eine Längsrichtung (L) des Lastenbocks (1) eingeschränkt ist, und ein Verschiebemittel, welches ein Verschieben des Oberteils (2) gegenüber dem Unterteil (3) ermöglicht, **dadurch gekennzeichnet, dass** das Verschiebemittel eine oder mehrere Gleitflächen (5) und/oder Rollkörper im Kontaktbereich zwischen Oberteil (2) und Unterteil (3) umfasst.

2. Lastenbock nach dem vorherigen Anspruch, **dadurch gekennzeichnet, dass** die Stützvorrichtung eine Aufnahmeeinrichtung (6) für Stützen (7) umfasst.

3. Lastenbock nach einem der vorherigen Ansprüche, **dadurch gekennzeichnet, dass** die Stützvorrichtung Stützen (7) umfasst, die vorzugsweise klappbar und/oder teleskopierbar sind.

4. Lastenbock nach einem der vorherigen Ansprüche, **dadurch gekennzeichnet, dass** die Rollkörper in Form von Lagerwellen (10) und/oder Lagerkugeln vorliegen.

5. Lastenbock nach einem der vorherigen Ansprüche, **dadurch gekennzeichnet, dass** eine Positioniereinrichtung vorgesehen ist, die es erleichtert, das Oberteil (2) in Bezug auf das Unterteil (3) exakt zu positionieren.

6. Lastenbock nach Anspruch 5, **dadurch gekennzeichnet, dass** die Positioniereinrichtung mindestens eine Rastlücke (14), insbesondere eine Vertiefung oder eine Aussparung, umfasst zum Zusammenwirken mit einem oder mehreren der Verschiebemittel.

7. Lastenbock nach Anspruch 5 oder 6, **dadurch gekennzeichnet, dass** die Positioniereinrichtung einen, insbesondere mechanischen, elektrischen und/oder elektronischen, Sensor (16) umfasst.

8. Lastenbock nach einem der vorherigen Ansprüche, **dadurch gekennzeichnet, dass** das Verschiebemittel eine Verschiebeeinrichtung, insbesondere mit einem oder mehreren elektrischen (15), pneumatischen und/oder hydraulischen Elementen (11), umfasst.

9. Lastenbock nach einem der vorherigen Ansprüche, **dadurch gekennzeichnet, dass** elektrische, pneumatische und/oder hydraulische Anschlüsse vorgesehen sind.

10. Lastenbock nach einem der vorherigen Ansprüche, **dadurch gekennzeichnet, dass** die Verschiebeeinrichtung Steuerelemente (12) und/oder einen Anschluss für ein Steuergerät (17) aufweist.

11. Lastenbock nach einem der vorherigen Ansprüche, **dadurch gekennzeichnet, dass** eine Relativbewegung von Unterteil (3) zu Oberteil (2) in Vertikalrichtung (V) und/oder Querrichtung (Q) des Lastenbocks (1) durch Formschluss begrenzt oder unterbunden ist.

12. Lastenbock nach einem der vorherigen Ansprüche, **dadurch gekennzeichnet, dass** das Unterteil (3) Verbindungselemente zum Verbinden mit einem Fahrzeug aufweist, insbesondere Eckbeschläge (20) zum Zusammenwirken mit Twistlocks.

13. Wechselaufbau, aufweisend mindestens zwei Lastenböcke (1) nach einem oder mehreren der vorherigen Ansprüche.

14. Verfahren zum Aufladen von auf mindestens einem Lastenbock (1) gemäß einem der Ansprüche 1 bis 12 gelagerten Gütern auf eine Aufladefläche (9) eines Fahrzeugs, wobei
- die Aufladefläche (9) unter den Lastenbock (1) rangiert wird,
- ein Unterteil (3) des Lastenbocks (1) so verschoben wird, dass eine gewünschte Lage von Unterteil (3) zu Aufladefläche (9) erzielt wird,
- das Unterteil (3) mit der Aufladefläche (9) in Kontakt gebracht wird und
- ein Oberteil (2) des Lastenbocks (1) gegenüber dem Unterteil (3) so verschoben wird, dass eine gewünschte Lage von Oberteil (2) zu Unterteil (3) erzielt wird.

15. Verfahren zum Abstellen eines auf einer Aufladefläche (9) eines Fahrzeugs befindlichen Lastenbocks (1) gemäß einem der Ansprüche 1 bis 12 mit darauf gelagerten Gütern auf eine Fläche (8), wobei
- die Aufladefläche (9) an einen Abstellort rangiert wird,
- ein Oberteil (2) des Lastenbocks (1) gegenüber einem Unterteil (3) des Lastenbocks (1) so verschoben wird, dass das Oberteil (2) eine gewünschte Endposition einnimmt und
- das Unterteil (3) außer Kontakt mit der Aufladefläche (9) gebracht wird.

## Claims

1. Load stand for storing and transporting goods, comprising a top part (2) for supporting the goods by means of a support device for placing the load stand (1) on a surface (8), a bottom part (3) displaceably connected to the top part (2) by means of a guide (4), the motion of the bottom part (3) relative to the top part (2) being limited by the guide (4) preferably along a longitudinal direction (L) of the load stand (1), and a displacing means enabling displacing the top part (2) relative to the bottom part (3), **characterized in that** the displacing means comprises one or more sliding surfaces (5) and/or rolling elements in the contact region between the top part (2) and the bottom part (3).

2. The load stand according to the preceding claim, **characterized in that** the support device comprises a receiving device (6) for supports (7).

3. The load stand according to any one of the preceding claims, **characterized in that** the support device comprises supports (7), preferably foldable and/or telescoping.

4. The load stand according to any one of the preceding claims, **characterized in that** the rolling elements are present in the form of bearing shafts (10) and/or bearing balls.

5. The load stand according to any one of the preceding claims, **characterized in that** a positioning device is provided for facilitating positioning the top part (2) precisely relative to the bottom part (3).

6. The load stand according to claim 5, **characterized in that** the positioning device comprises at least one latching gap (14), particularly a recess or cutout, for interacting with one or more displacing means.

7. The load stand according to claim 5 or 6, **characterized in that** the positioning device comprises a particularly mechanical, electrical, and/or electronic sensor (16).

8. The load stand according to any one of the preceding claims, **characterized in that** the displacing means comprises a displacing device, particularly having one or more electrical (15), pneumatic, and/or hydraulic elements (11).

9. The load stand according to any one of the preceding claims, **characterized in that** electrical, pneumatic, and/or hydraulic connections are provided.

10. The load stand according to any one of the preceding claims, **characterized in that** the displacing device comprises control elements (12) and/or a connection for a control device (17).

11. The load stand according to any one of the preceding claims, **characterized in that** a motion of the bottom part (3) relative to the top part (2) in the vertical direction (V) and/or transverse direction (Q) of the load stand (1) is limited or prevented by a form fit.

12. The load stand according to any one of the preceding claims, **characterized in that** the bottom part (3) comprises connecting elements for connecting to a vehicle, particularly corner fittings (20) for interacting with twistlocks.

13. Interchangeable structure comprising two or more load stands (1) according to any one or more of the preceding claims.

14. Method for loading goods stored on at least one load stand (1) according to any one of the claims 1 through 12 onto a loading surface (9) of a vehicle, wherein
- the loading surface (9) is maneuvered under the load stand (1),
- a bottom part (3) of the load stand (1) is displaced so that a desired position of the bottom part (3) relative to the loading surface (9) is achieved,
- the bottom part (3) is brought into contact with the loading surface (9), and
- a top part (2) of the load stand (1) is displaced relative to the bottom part (3) so that a desired position of the top part (2) relative to the bottom part (3) is achieved.

15. Method for placing a load stand (1) according to any one of the claims 1 through 12, present on a loading surface (9) of a vehicle and having goods stored thereon, onto a surface (8), wherein
- the loading surface (9) is maneuvered to a placing location,
- a top part (2) of the load stand (1) is displaced relative to a bottom part (3) of the load stand (1) so that the top part (2) assumes a desired final position, and
- the bottom part (3) is brought out of contact with the loading surface (9).

## Revendications

1. Chevalet de chargement pour le stockage et le transport de marchandises, présentant une partie supérieure (2) pour supporter les marchandises avec un dispositif de support pour poser le chevalet de chargement (1) sur une surface (8), une partie inférieure (3) reliée à la partie supérieure (2) de manière mobile par un guidage (4), sachant que le mouvement de la partie inférieure (3) par rapport à la partie supérieure (2) est limité par le guidage (4) de préférence à une direction longitudinale (L) du chevalet de chargement (1), et un moyen de translation qui permet une translation de la partie supérieure (2) par rapport à la partie inférieure (3), **caractérisé en ce que** le moyen de translation comprend une ou plusieurs surfaces de glissement (5) et/ou corps de roulement dans la zone de contact entre la partie supérieure (2) et la partie inférieure (3).

2. Chevalet de chargement selon la revendication précédente, **caractérisé en ce que** le dispositif de support comprend un dispositif de réception (6) pour des béquilles (7).

3. Chevalet de chargement selon l'une quelconque des revendications précédentes, **caractérisé en ce que** le dispositif de support comprend des béquilles (7), qui sont de préférence rabattables et/ou télescopiques.

4. Chevalet de chargement selon l'une quelconque des revendications précédentes, **caractérisé en ce que** les corps de roulement se présentent sous la forme d'arbres de palier (10) et/ou de billes de palier.

5. Chevalet de chargement selon l'une quelconque des revendications précédentes, caractérisé en ce qu'il est prévu un dispositif de positionnement qui facilite le positionnement exact de la partie supérieure (2) par rapport à la partie inférieure (3).

6. Chevalet de chargement selon la revendication 5, **caractérisé en ce que** le dispositif de positionnement comprend au moins un interstice d'encliquetage (14), en particulier un approfondissement ou un évidement, destiné à coopérer avec un ou plusieurs des moyens de translation.

7. Chevalet de chargement selon la revendication 5 ou 6, **caractérisé en ce que** le dispositif de positionnement comprend un capteur (16), en particulier mécanique, électrique et/ou électronique.

8. Chevalet de chargement selon l'une quelconque des revendications précédentes, **caractérisé en ce que** le moyen de translation comprend un dispositif de translation, en particulier avec un ou plusieurs éléments électriques (15), pneumatiques et/ou hydrauliques (11).

9. Chevalet de chargement selon l'une quelconque des revendications précédentes, **caractérisé en ce que** des raccords électriques, pneumatiques et/ou hydrauliques sont prévus.

10. Chevalet de chargement selon l'une quelconque des revendications précédentes, **caractérisé en ce que** le dispositif de translation présente des éléments de commande (12) et/ou un connecteur pour un appareil de commande (17).

11. Chevalet de chargement selon l'une quelconque des revendications précédentes, **caractérisé en ce qu'**un mouvement relatif de la partie inférieure (3) par rapport à la partie supérieure (2) dans la direction verticale (V) et/ou la direction transversale (Q) du chevalet de chargement (1) est limité ou empêché par une liaison par complémentarité de formes.

12. Chevalet de chargement selon l'une quelconque des revendications précédentes, **caractérisé en ce que** la partie inférieure (3) comprond des éléments de connexion pour la connexion avec un véhicule, en particulier des ferrures d'angle (20) destinées à coopérer avec des twistlocks.

13. Superstructure amovible comprenant au moins deux chevalets de chargement (1) selon l'une quelconque ou plusieurs des revendications précédentes.

14. Procédé de chargement, sur une surface de chargement (9) d'un véhicule, de marchandises stockées sur au moins un chevalet de chargement (1) selon l'une quelconque des revendications 1 à 12, dans lequel
- la surface de chargement (9) est manœuvrée sous le chevalet de chargement (1),
- une partie inférieure (3) du chevalet de chargement (1) est déplacée de manière à obtenir une position souhaitée de la partie inférieure (3) par rapport à la surface de chargement (9),
- la partie inférieure (3) est mise en contact avec la surface de chargement (9) et
- une partie supérieure (2) du chevalet de chargement (1) est déplacée par rapport à la partie inférieure (3) de manière à obtenir une position souhaitée de la partie supérieure (2) par rapport à la partie inférieure (3).

15. Procédé pour déposer, sur une surface (8), un chevalet de chargement (1) selon l'une quelconque des revendications 1 à 12 se trouvant sur une surface de chargement (9) d'un véhicule, avec des marchandises stockées sur lui, dans lequel
- la surface de chargement (9) est manœuvrée vers un lieu de stockage,
- une partie supérieure (2) du chevalet de chargement (1) est déplacée par rapport à une partie inférieure (3) du chevalet de chargement (1) de manière à ce que la partie supérieure (2) prenne une position finale souhaitée et
- la partie inférieure (3) est mise hors de contact avec la surface de chargement (9).
